# EUROPEAN PATENT SPECIFICATION

(11) **EP 3 001 285 B1**
(45) Date of publication and mention of the grant of the patent: **02.05.2018**
(21) Application number: 14800866.7
(22) Date of filing: 20.02.2014
(51) Int. Cl.: G06F 3/023, G06F 3/0488, H04N 5/44, H04N 21/422

(54) **INPUT METHOD AND SYSTEM**
EINGABEVERFAHREN UND SYSTEM
PROCÉDÉ ET SYSTÈME DE SAISIE

(30) Priority: 22.05.2013 CN 201310192770
(43) Date of publication of application: 30.03.2016
(73) Proprietor: Xiaomi Inc., Beijing 100085 (CN)
(72) Inventor: LI, Chuangqi, Beijing 100085 (CN); WANG, Fa, Beijing 100085 (CN); QIAN, Cheng, Beijing 100085 (CN)
(74) Representative: Sackin, Robert
(86) International application number: PCT/CN2014/072323
(87) International publication number: WO 2014/187179

(56) References cited:
- WO-A1-99/65212
- CN-A- 102 460 350
- CN-A- 102 789 335
- CN-A- 102 854 996
- CN-A- 103 294 222
- US-A1- 2010 225 587
- US-A1- 2010 231 521
- US-A1- 2010 333 011

## Description

### TECHNICAL FIELD

The embodiments of the present disclosure relate to the technical field of input methods and, more particularly, to an input method and input system.

### BACKGROUND

Currently, there are two kinds of mainstream input methods: English full keyboard input method and nine-square grid input method.

In the English full keyboard input method, only clicking corresponding English alphabet keys is needed when inputting English letters.

In the nine-square grid input method, if one wants to input letters indicated on a key, he needs to click the key several times such that the letters indicated on the key are displayed sequentially, and then stop clicking the key after finding the corresponding letter; then, after an interval of a few seconds, he may input a next letter in the same manner.

For the traditional remote controller having five-way keys (Up, Down, Left, Right and Center OK keys), its input method is to display the English full keyboard or the nine-square grid keyboard on a screen, select the letters through the four direction keys (Up, Down, Left and Right keys), and then confirm the selection by using the Center OK key to simulate a click action.

With gradual maturation of smart TV technology, inputting characters on the smart TV has been one of the basic functions of the smart TV.

However, in both the English full keyboard and the nine-square grid keyboard based on the numeric keys, when selecting a state of the characters (such as switching the uppercase and lowercase of the characters), the "shift" key will be pressed firstly. After the "shift" key is pressed, the input state of the characters on the whole keyboard is changed into an uppercase or lowercase input. Every time when selecting the state of the characters, it is needed to repeatedly press the direction keys to move an input cursor to the "shift" key or a key having the same function, and after the "shift" key is pressed, the input cursor is moved back to the character key again. When characters having a variety of states frequently appear in a string of characters to be input, the efficiency of inputting characters will be greatly reduced by using the above input method.

International patent application with publication No. WO99/65212 discloses a technique to switch between upper and lowercase alphabetic characters in which a numeric key is held in the depressed position by a user. If a numeric key is pressed by the user for a period of time less than a predetermined threshold time, the selected alphabetic character is displayed in a default character case. If the selected numeric key is held in the depressed position for a period of time exceeding the predetermined threshold period, the character case is altered and the altered alphabetic character is displayed for the user. US patent application with publication No. US2010/0225587 discloses an electronic device which allows entry of a character string that has a display which indicates an entered character, a toggle key adapted for entering a plurality of assigned characters, a shift key adapted for shifting a character entry position on the display, and a controller which allows consecutive first to third operations.

US patent application with publication No. US2010/0231521 discloses a mobile phone that, in order to facilitate selection of an intended character from among a plurality of characters, includes a designated-position detecting portion for detecting a designated position, a moving direction detecting portion for detecting a moving direction of the detected position, a group selecting portion, when the moving direction is detected, for selecting one of a plurality of character types into which the plurality of characters have been classified, on the basis of the moving direction, and a character selecting portion for selecting one of at least one character classified in the selected character type.

US patent application with publication No. US2010/0333011 discloses a system of character input using a virtual keyboard. The virtual keyboard may be displayed on a touch screen and may include a plurality of keys, each key having a number of characters or symbols. Characters associated with a particular key may be selected through a series of related touch screen inputs.

### SUMMARY

The embodiments of the present disclosure disclose an input method and input system for solving the problem of low efficiency of inputting characters due to the complicated operations during the selection of the states of characters.

Aspects of the invention are defined by the independent claims below to which reference should now be made. Optional features are defined by the dependent claims.

In a first aspect of the embodiments of the present disclosure, the present disclosure provides an input method, which includes:
receiving character input information, and determining an inputted character and time information associated with the input operation according to the character input information; and
selecting a state of the character according to the time information and a time threshold value for switching state.

In one embodiment, the time threshold value for switching state includes a first threshold value and a second threshold value, and the first threshold value is smaller than the second threshold value; the selecting the state of the character according to the time information and the time threshold value for switching state includes:
judging a magnitude relationship between the time information and the first threshold value and/or the second threshold value;
when the time information is smaller than the first threshold value, maintaining the state of the character to be the current state;
when the time information is greater than or equal to the first threshold value and is smaller than the second threshold value, switching the state of the character; and
when the time information is greater than or equal to the second threshold value, switching the state of the character, and locking the state of subsequently determined characters to be the switched state.

In one embodiment, when the character input information is generated by a touch operation, the character input information includes starting point coordinate information and end point coordinate information of the touch operation; and the time information includes a dwell time of the touch operation corresponding to the end point coordinate information.

In one embodiment, the determining the inputted character according to the character input information includes:
obtaining an identifier at a location where the starting point coordinate information locates according to the starting point coordinate information, a mapping relationship existing between the identifier and candidate characters; and
determining the inputted character according to the starting point coordinate information, the end point coordinate information, and the mapping relationship between the identifier and the candidate characters.

In one embodiment, the determining the inputted character according to the starting point coordinate information, the end point coordinate information, and the mapping relationship between the identifier and the candidate characters includes:
when the starting point coordinate information and the end point coordinate information belong to a range of the candidate characters corresponding to the same identifier, and the time information is greater than or equal to a dwell threshold value, obtaining the candidate character at a location where the end point coordinate information locates, as the inputted character; and
when the starting point coordinate information and the end point coordinate information do not belong to the range of the candidate characters corresponding to the same identifier, the identifier is located at the location where the starting point coordinate information locates, and the time information is greater than or equal to the dwell threshold value, obtaining the candidate character corresponding to the identifier located at the location where the starting point coordinate information locates within a range of a line determined by the starting point coordinate information and the end point coordinate information, as the inputted character.

In one embodiment, the determining the time information associated with the input operation according to the character input information includes:
reading out the time information from the character input information.

In a second aspect of the embodiments of the present disclosure, the present disclosure provides an input system, which includes:
a reception determining module configured to receive character input information, and determine an inputted character and time information associated with the input operation according to the character input information; and
a selection module configured to select the state of the character based on the time information and a time threshold value for switching state.

In one embodiment, the time threshold value for switching state includes a first threshold value and a second threshold value, and the first threshold value is smaller than the second threshold value; and the selection module includes:
a judgment sub-module configured to judge the magnitude relationship between the time information and the first threshold value and/or the second threshold value; and
a selection sub-module configured to maintain the state of the character to be the current state when the time information is smaller than the first threshold value; switch the state of the character when the time information is greater than or equal to the first threshold value and smaller than the second threshold value; and switch the state of the character and lock the state of subsequently determined characters to be the switched state when the time information is greater than or equal to the second threshold value.

In one embodiment, when the character input information is generated by a touch operation, the character input information includes starting point coordinate information and end point coordinate information of the touch operation; and the time information includes a dwell time of the touch operation corresponding to the end point coordinate information.

In one embodiment, the reception determining module includes:
an obtaining sub-module configured to obtain an identifier at a location where the starting point coordinate information locates based on the starting point coordinate information, a mapping relationship existing between the identifier and candidate characters; and
a determination sub-module configured to determine the inputted character based on the starting point coordinate information, the end point coordinate information, and the mapping relationship between the identifier and the candidate characters.

In one embodiment, the determination sub-module is configured to obtain the candidate characters at the location where the end point coordinate information locates, as the inputted character, when the starting point coordinate information and the end point coordinate information belong to the range of the candidate characters corresponding to the same identifier, and the time information is greater than or equal to the dwell threshold value; and to obtain the candidate character corresponding to the identifier located at location where the starting point coordinate information locates within a range of a line determined by the starting point coordinate information and the end point coordinate information, as the inputted character, when the starting point coordinate information and the end point coordinate information do not belong to the range of the candidate characters corresponding to the same identifier, the identifier is located at the location where the starting point coordinate information locates, and the time information is greater than or equal to the dwell threshold value.

In one embodiment, the reception determining module determining the time information associated with the input operation according to the character input information includes:
the reception determining module reading out the time information from the character input information.

The technical solutions provided by the embodiments of the present disclosure may have the following advantages:
after determining the inputted character and the time information associated with the input operation, the state of the character is selected according to the comparison result between the time information and the time threshold value for switching state. When the time information is long, the current state of the character can be switched to other states; when the time information is short, the state of the character can be maintained to be the current state; and when the time information reaches a certain length, the current state of the character can be switched to other states, and the switched state is locked so that subsequently inputted characters maintain such a switched state. The state of the character can be selected only according to the comparison result between the time information and the time threshold value for switching state, which avoids the complicated operation for switching the state of characters, and improves the efficiency of inputting characters.

It should be understood that, the above general description and the following detailed description are only illustrative and explanatory, but do not restrict the present invention.

### BRIEF DESCRIPTION OF THE DRAWINGS

The accompanying drawings are incorporated into and constitute a part of the present specification, illustrate the embodiments in accordance with the present disclosure, and are used for explaining the principle of the present disclosure together with the description.
FIG. 1 is a schematic diagram of a five-way keyboard according to an illustrative embodiment;
FIG. 2 is a flowchart of an input method according to an illustrative embodiment;
FIG. 3 is a flowchart of an input method according to an illustrative embodiment;
FIG. 4 is a flowchart of an input method according to an illustrative embodiment;
FIG. 5 is a structural diagram of an input system according to an illustrative embodiment; and
FIG. 6 is a structural diagram of an input system according to an illustrative embodiment.

### DETAILED DESCRIPTION

For making the above objects, features and advantages of the present disclosure to be more apparent and easier to be understood, hereinafter, the present disclosure will be described in further detail in conjunction with the accompanying drawings and embodiments.

In the embodiments of the present disclosure, after determining the inputted character and the time information associated with the input operation, the state of the inputted character may be selected according to the magnitude relationship between the time information and a time threshold value for switching state.

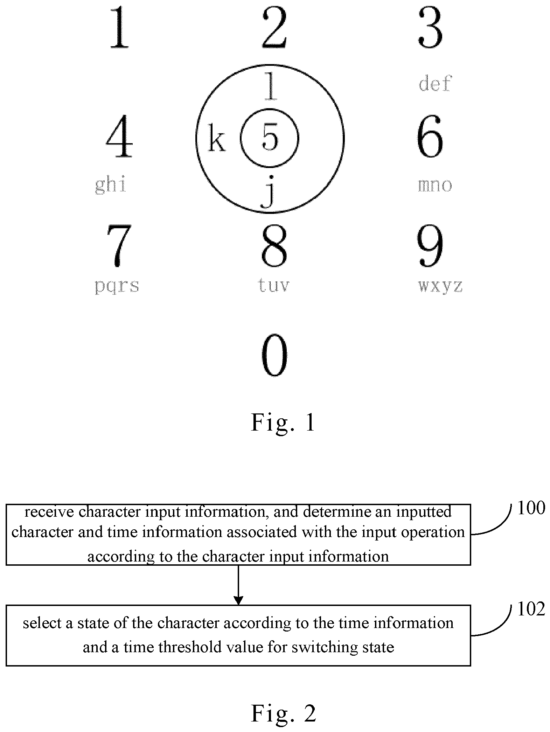

Moreover, the execution about determining the inputted character in the embodiments of the present disclosure may refer to, but not limited to the following steps, the operation procedure of which is accomplished by means of the five-way keyboard remote controller (the five-way keyboard remote controller includes Up, Down, Left, Right, and Center OK keys).
A. When inputting a character, a nine-square grid keyboard may appear on a terminal screen, and the input cursor selects the figure "5" on the nine-square grid keyboard by default.
B. When the Center OK key is pressed, a schematic diagram of a five-way keyboard as shown in FIG. 1 may be displayed.
C. If one wants to select the character "1", the character "1" will be inputted after the Up key is pressed.
D. The five-way keyboard is retracted when the character "1" is inputted successfully.
E. The numeric keyboard is selected by moving the four direction keys of "Up", "Down", "Left" and "Right" on the five-way keyboard remote controller.
F. After the input cursor selects a certain numeric keyboard, the Center OK key is pressed, and thus the corresponding five-way keyboard is popped out.
G. The corresponding operation in the step C is repeated.

It should be emphasized that, in addition to the realization of the above operations by the five-way keyboard remote controller, it may be also possible to realize the character confirmation process by the touch operation on a touch screen.

Meanwhile, according to the magnitude relationship between the time information and the time threshold value for switching state, the execution of selecting the state of the inputted character may also be achieved based on the five-way keyboard remote controller.

For example, in the case that the current input state of the characters is a lowercase state, in the above step C, if one wants to input an uppercase character "L", the Up key should be pressed for several seconds, and thus the lowercase character "1" can be switched to the uppercase character "L"; similarly, in the case that the current input state of the characters is an uppercase state, if one wants to enter the lowercase character "1", the Up key should be pressed for several seconds, and then the uppercase character "L" can be switched to the lowercase character "1".

Hereinafter, an input method and input system disclosed by the present disclosure will be introduced in detail by listing several detailed embodiments.

### First Embodiment

An input method disclosed by an embodiment of the present disclosure will be introduced in detail.

FIG. 2 illustrates a flowchart of an input method in the embodiment of the present disclosure.

In step 100, character input information is received, and the inputted character and time information associated with the input operation are determined according to the character input information.

The character input information may be information generated by the character input operation. If the character input operation is an entity key operation, the character input information is key information and the like generated by pressing the entity key, which may be represented as a series of codes; and if the character input operation is a touch operation on a touch screen, the character input information is coordinate information and the like generated by the touch operation.

The above characters may include letters and symbols, etc.

The time information associated with the input operation may be a key dwell time or a touch operation dwell time of the character input operation, and the above dwell time may be a continuous time period. For example, if the character input operation is an entity key operation, the time information may be a dwell time during which the entity key "A" is pressed; and if the character input operation is a touch operation, the time information may be a dwell time during which a point having the coordinate information of (a, b) on the touch screen is touched.

If the character input information includes the key information, the character corresponding to the key information may be determined; and if the character input information includes the coordinate information, the character on the location where the coordinate information locates may be determined.

In step 102, a state of the character is selected according to the time information and a time threshold value for switching state.

The above time threshold value for switching state may be a time-scale value, such as a few seconds or tens of milliseconds, which may be set according to actual situations.

The step 102 may compare the time information with the time threshold value for switching state, and select the state of the characters based on the comparison results.

Selecting the state of the characters may include the following two situations:
(1) maintaining the state of the characters to be the current state; and
(2) switching the state of the characters to be other states.

In summary, the input method disclosed by the embodiment of the present disclosure may have the following advantages:
after determining the inputted character and the time information associated with the input operation, the state of the character is selected according to the comparison result between the time information and the time threshold value for switching state. When the time information is long, the current state of the character can be switched to other states; when the time information is short, the state of the character can be maintained to be the current state; and when the time information reaches a certain length, the current state of the character can be switched to other states, and the switched state is locked so that subsequently inputted characters maintain such a switched state. The state of the character can be selected only according to the comparison result between the time information and the time threshold value for switching state, which avoids the complicated operation for switching the state of characters, and improves the efficiency of inputting characters.

### Second Embodiment

An input method disclosed by an embodiment of the present disclosure will be introduced in detail.

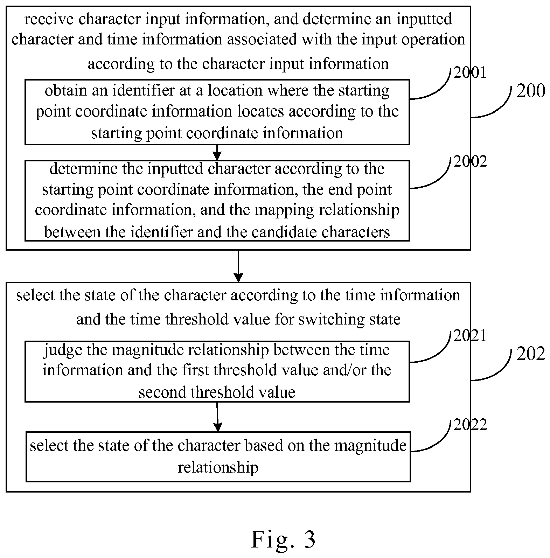

FIG. 3 illustrates a flowchart of an input method in the embodiment of the present disclosure.

In step 200, character input information is received, and the inputted character and time information associated with the input operation are determined according to the character input information.

The time threshold value for switching state may include a first threshold value and a second threshold value, and the first threshold value may be smaller than the second threshold value.

The character input information may be generated by the entity key operation, or may be generated by the touch operation.

When the character input information is generated by the touch operation, the character input information may include starting point coordinate information and end point coordinate information of the touch operation. Moreover, the time information herein may include a dwell time of the touch operation corresponding to the end point coordinate information.

For example, the starting point coordinate information of the touch operation is (100, 200), the end point coordinate information thereof is (300, 400), and the touch operation pauses for 2 seconds at a location corresponding to the end point coordinate information (300, 400).

The following execution of respective steps will be introduced in the condition that the character input information is generated by the touch operation.

In the step 200, determining the inputted character according to the character input information may include the following two sub-steps.

In the sub-step 2001, an identifier at the location where the starting point coordinate information locates is obtained according to the starting point coordinate information.

There is a mapping relationship between the identifier and candidate characters. Furthermore, the identifier may be presented as figures, symbols, and other forms, which is not limited by the embodiments of the present disclosure.

For example, the starting point coordinate information is (100, 200), and the identifier at the location where the starting point coordinate information locates is the figure "3". After obtaining the identifier at the location where the starting point coordinate information locates, it is possible to obtain the candidate characters corresponding to the identifier, and the relative positional relationship between the candidate characters and the identifier in accordance with the mapping relationship between the identifier and the candidate characters. The candidate characters corresponding to the identifier "3" are "d", "e" and "f", wherein the candidate character "d" is on the left of the identifier "3", the candidate character "e" is over the identifier "3", and the candidate character "f" is under the identifier "3".

In the sub-step 2002, the inputted character is determined according to the starting point coordinate information, the end point coordinate information, and the mapping relationship between the identifier and the candidate characters.

In one example, the execution of the above sub-step 2002 may be divided into the following two situations:
(1) When the starting point coordinate information and the end point coordinate information belong to a range of the candidate characters corresponding to the same identifier, and the time information is greater than or equal to the dwell threshold value, the candidate character at a location where the end point coordinate information locates is obtained as the inputted character.

For example, the starting point coordinate information (100, 200) and the end point coordinate information (100, 300) belong to the range of the candidate characters "d", "e" and "f" corresponding to the same identifier "3", and the time information "2 seconds" is greater than the dwell threshold value "1 second", then the candidate character "e" at the location of the end point coordinate information (100, 300) is the inputted character.
(2) When the starting point coordinate information and the end point coordinate information do not belong to the range of the candidate characters corresponding to the same identifier, the identifier is located at the location where the starting point coordinate information locates, and the time information is greater than or equal to the dwell threshold value, the candidate character corresponding to the identifier located at the location where the starting point coordinate information locates within a range of a line determined by the starting point coordinate information and the end point coordinate information is obtained as the inputted character.

For example, the starting point coordinate information (100, 200) belongs to the range of the candidate characters "d", "e" and "f" corresponding to the identifier "3", and the end point coordinate information (0, 0) belongs to the range of the candidate characters "t", "u" and "v" corresponding to the identifier "8", the identifier "3" is located at the location where the starting point coordinate information (100, 200) locates, and the time information "2 seconds" is greater than the dwell threshold value "1 second", then the candidate character "f" corresponding to the identifier "3" located at the location where the starting point coordinate information (100, 200) locates within the range of the line determined by the starting point coordinate information (100, 200) and the end point coordinate information (0, 0) is the inputted character.

Moreover, in the step 200, determining the time information associated with the input operation according to the character input information may include:

reading out the time information from the character input information.

In step 202, the state of the character is selected according to the time information and the time threshold value for switching state.

The step 202 may include:
a sub-step 2021 for judging the magnitude relationship between the time information and the first threshold value and/or the second threshold value.

In one example, the above sub-step 2021 may include the following three situations.
(1) The magnitude relationship between the time information and the first threshold value is judged.

For example, the first threshold value is 2 seconds, the second threshold value is 5 seconds, and the time information is 1 second. In this case, the magnitude relationship between the time information and the first threshold value is judged.
(2) The magnitude relationship between the time information and the second threshold value is judged.

For example, the first threshold value is 2 seconds, the second threshold value is 5 seconds, and the time information is 6 seconds. In this case, the magnitude relationship between the time information and the second threshold value is judged.
(3) The magnitude relationship between the time information and the first threshold value, and the magnitude relationship between the time information and the second threshold value are judged, respectively.

For example, the first threshold value is 2 seconds, the second threshold value is 5 seconds, and the time information is 3 seconds. In this case, the magnitude relationships between the time information and the first, second threshold values are judged.

In sub-step 2022, the state of the character is selected based on the magnitude relationship.

In one example, the sub-step 2022 may include the following situations.
(1) When the time information is smaller than the first threshold value, the state of the character is maintained to be the current state.

For example, the first threshold value is 2 seconds, the time information is 1 second, and the time information is smaller than the first threshold value; if the current state of the character in this case is a state "a", the state of the character is maintained to be the current state "a", that is, the state of the character is not changed.
(2) When the time information is greater than or equal to the first threshold value and is smaller than the second threshold value, the state of the character is switched.

For example, the first threshold value is 2 seconds, the second threshold value is 5 seconds, the time information is 3 seconds, and the time information is greater than the first threshold value and smaller than the second threshold value; if the current state of the character in this case is the state "a", the state of the character can be switched to the state "b".
(3) When the time information is greater than or equal to the second threshold value, the state of the character is switched, and the state of subsequently determined characters is locked to be the switched state.

For example, the second threshold value is 5 seconds, the time information is 6 seconds, and the time information is greater than the second threshold value; if the current state of the character in this case is the state "a", the state of the character can be switched to the state "b", and the state of subsequently determined characters is locked to be the state "b".

In summary, the input method disclosed by the embodiment of the present disclosure may have the following advantages:
after determining the inputted character and the time information associated with the input operation, the state of the character is selected according to the comparison result between the time information and the time threshold value for switching state. When the time information is long, the current state of the character can be switched to other states; when the time information is short, the state of the character can be maintained to be the current state; and when the time information reaches a certain length, the current state of the character can be switched to other states, and the switched state is locked so that subsequently inputted characters maintain such a switched state. The state of the character can be selected only according to the comparison result between the time information and the time threshold value for switching state, which avoids the complicated operation for switching the states of characters, and improves the efficiency of inputting characters.

### Third Embodiment

An input method disclosed by an embodiment of the present disclosure will be introduced in detail.

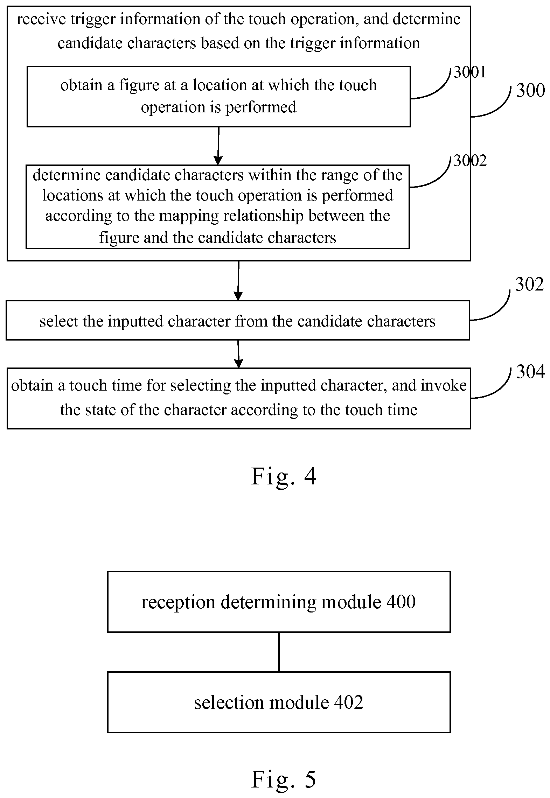

FIG. 4 illustrates a flowchart of an input method in the embodiment of the present disclosure.

In step 300, trigger information of a touch operation is received, and candidate characters are determined based on the trigger information.

Before the input operation, a nine-square grid keyboard can be displayed on a screen of an input terminal, and an input cursor selects the figure "5" by default.

In one example, the step 300 may include the following sub-steps.

In sub-step 3001, a figure at a location at which the touch operation is performed is obtained.

The sub-step 3001 can obtain the figure at the location where the coordinate information locates according to the coordinate information in the trigger information.

In sub-step 3002, candidate characters within the range of the location at which the touch operation is performed are determined according to the mapping relationship between the figure and the candidate characters.

The figures in the nine-square grid keyboard may correspond to respective candidate characters.

In step 302, the inputted character is selected from the candidate characters.

In one example, the inputted character can be selected according to vector direction information in the trigger information. The starting point of the touch operation is a figure, the stop position of the touch operation is the end point, and the inputted character is obtained by acquiring the candidate character covered in a vector direction from the starting point to the end point.

In step 304, a touch time for selecting the inputted character is obtained, and the state of the character is invoked according to the touch time.

In one example, three kinds of states of the character may be defined as: the lowercase state, the uppercase state, and the state of locking uppercase/lowercase.
(1) The current state is the lowercase state.

For example, when 0 < touch time T < 2s, the state of the character is determined to be the lowercase state.

When 2s ≤ touch time T < 5s, the state of the character is determined to be the uppercase state.

When 5s ≤ touch time T, the state of the character is determined to be the uppercase state, and at the same time the state of the character is locked as the uppercase state, so that the state of subsequently inputted characters is the uppercase state.
(2) The current state is the uppercase state.

For example, when 0 < touch time T < 2s, the state of the character is determined to be the uppercase state.

When 2s ≤ touch time T < 5s, the state of the character is determined to be the lowercase state.

When 5s ≤ touch time T, the state of the character is determined to be the lowercase state, and at the same time the state of the character is locked as the lowercase state, so that the state of subsequently inputted characters is the lowercase state.

It should be noted that the above time "0", "2s" and "5s" which are used to be compared with the touch time T can be set according to the actual situations.

In summary, the input method disclosed by the embodiment of the present disclosure may have the following advantages:

after determining the inputted character and the time information associated with the input operation, the state of the character is selected according to the comparison result between the time information and the time threshold value for switching state. When the time information is long, the current state of the character can be switched to other states; when the time information is short, the state of the character can be maintained to be the current state; and when the time information reaches a certain length, the current state of the character can be switched to other states, and the switched state is locked so that subsequently inputted characters maintain such a switched state. The state of the character can be selected only according to the comparison result between the time information and the time threshold value for switching state, which avoids the complicated operation for switching the states of characters, and improves the efficiency of inputting characters.

### Fourth Embodiment

An input system disclosed by an embodiment of the present disclosure will be introduced in detail.

FIG. 5 illustrates a structural diagram of an input system in the embodiment of the present disclosure.

The input system may include:
a reception determining module 400; and a selection module 402.

Hereinafter, the functions of the respective modules and the relationship between the respective modules will be introduced in detail, respectively.

The reception determining module 400 is configured to receive character input information, and determine the inputted character and time information associated with the input operation according to the character input information.

The selection module 402 is configured to select the state of the character based on the time information and a time threshold value for switching state.

In summary, the input system disclosed by the embodiment of the present disclosure may have the following advantages:

after determining the inputted character and the time information associated with the input operation, the state of the character is selected according to the comparison result between the time information and the time threshold value for switching state. When the time information is long, the current state of the character can be switched to other states; when the time information is short, the state of the character can be maintained to be the current state; and when the time information reaches a certain length, the current state of the character can be switched to other states, and the switched state is locked so that subsequently inputted characters maintain such a switched state. The state of the character can be selected only according to the comparison result between the time information and the time threshold value for switching state, which avoids the complicated operation for switching the states of characters, and improves the efficiency of inputting characters.

### Fifth Embodiment

An input system disclosed by an embodiment of the present disclosure will be introduced in detail.

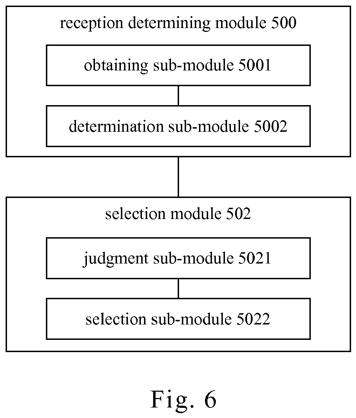

FIG. 6 illustrates a structural diagram of an input system in the embodiment of the present disclosure.

The input system may include:
a reception determining module 500; and a selection module 502.

The reception determining module 500 may include:
an obtaining sub-module 5001; and a determination sub-module 5002.

The selection module 502 may include:
a judgment sub-module 5021; and a selection sub-module 5022.

Hereinafter, the functions of the respective modules and sub-modules, and the relationships among the respective modules and sub-modules will be introduced in detail, respectively.

The reception determining module 500 is configured to receive character input information, and determine the inputted character and time information associated with the input operation according to the character input information.

When the character input information is generated by a touch operation, the character input information includes starting point coordinate information and end point coordinate information of the touch operation; and the time information includes a dwell time of the touch operation corresponding to the end point coordinate information.

In one example, the reception determining module 500 may include the obtaining sub-module 5001 and the determination sub-module 5002.

The obtaining sub-module 5001 is configured to obtain an identifier at a location where the starting point coordinate information locates according to the starting point coordinate information.

There is a mapping relationship between the identifier and the candidate characters.

The determination sub-module 5002 is configured to determine the inputted character based on the starting point coordinate information, the end point coordinate information, and the mapping relationship between the identifier and the candidate characters.

In one example, when the starting point coordinate information and the end point coordinate information belong to the range of the candidate characters corresponding to the same identifier, and the time information is greater than or equal to the dwell threshold value, the determination sub-module 5002 is configured to obtain the candidate characters at the location where the end point coordinate information locates, as the inputted character; and when the starting point coordinate information and the end point coordinate information do not belong to the range of the candidate characters corresponding to the same identifier, the identifier is located at the location where the starting point coordinate information locates, and the time information is greater than or equal to the dwell threshold value, the determination sub-module 5002 is configured to obtain the candidate character corresponding to the identifier at the location where the starting point coordinate information locates within a range of a line determined by the starting point coordinate information and the end point coordinate information, as the inputted character.

In one example, the reception determining module 500 determining the time information associated with the input operation according to the character input information may include:
the reception determining module 500 reads out the time information from the character input information.

The selection module 502 is configured to select the state of the character based on the time information and a time threshold value for switching state.

The time threshold value for switching state includes a first threshold value and a second threshold value, and the first threshold value is smaller than the second threshold value.

In one example, the selection module 502 may include:
the judgment sub-module 5021 configured to judge the magnitude relationship between the time information and the first threshold value and/or the second threshold value; and
the selection sub-module 5022 configured to maintain the state of the character to be the current state when the time information is smaller than the first threshold value; switch the state of the character when the time information is greater than or equal to the first threshold value and smaller than the second threshold value; and switch the state of the character and lock the state of subsequently determined characters to be the switched state when the time information is greater than or equal to the second threshold value.

Moreover, the input system may further include a storage module for storing the mapping relationship between the identifier and the candidate characters, and the storage module may also store the inputted characters and the states of the characters into a storage medium. When the same character is inputted again, the same character of different states may be read out directly from the storage medium for quick selection, or a character string containing the same character may be read out directly from the storage medium, wherein the character string can be formed by a plurality of characters of various states, such as a phrase or a sentence.

The storage module and the storage medium may reside in the client side or server side of the input system, or may be present in the client side and server side simultaneously; moreover, the character information and the like stored in the storage medium at the client side may be synchronized with the character information and the like stored in the storage medium at the server side. Also, the storage module and the storage medium may be located at different sides of the input system.

In summary, the input system disclosed by the embodiment of the present disclosure may have the following advantages:
after determining the inputted character and the time information associated with the input operation, the state of the character is selected according to the comparison result between the time information and the time threshold value for switching state. When the time information is long, the current state of the character can be switched to other states; when the time information is short, the state of the character can be maintained to be the current state; and when the time information reaches a certain length, the current state of the character can be switched to other states, and the switched state is locked so that subsequently inputted characters maintain such a switched state. The state of the character can be selected only according to the comparison result between the time information and the time threshold value for switching state, which avoids the complicated operation for switching the states of characters, and improves the efficiency of inputting characters.

Since the embodiments for the system are substantially similar to the embodiments for the method, the depiction to the embodiments for the system is relatively simple, and the relevant parts may be referred to the depiction to the corresponding portion of the embodiments for the method.

The respective embodiments in the present specification are described in a progressive manner, the emphasized content of each embodiment is the difference from other embodiments, and the same or similar parts among the respective embodiments may be referred to mutually.

The input method and system disclosed by the embodiments of the present disclosure are introduced in detail as above. Specific examples are used in the present disclosure for explaining the principle and embodiments of the present disclosure. The above description to the embodiments is only used to facilitate understanding the method of the present disclosure and its essential idea. Meanwhile, the person skilled in the art may make various modifications to the specific embodiments and the application scope according to the idea of the invention. In sum, the contents in the present specification should not be construed as limiting the present invention.

## Claims

1. An input method, comprising:
receiving (100, 200) character input information, and determining an inputted character and a dwell time associated with the input operation according to the character input information; and
selecting (102, 202) a state of the character according to the dwell time and a time threshold value for switching state,
wherein the time threshold value for switching state comprises a first threshold value and a second threshold value, and the first threshold value is smaller than the second threshold value;
the selecting (202) the state of the character according to the dwell time and the time threshold value for switching state comprises:
judging (2021) a magnitude relationship between the dwell time and the first threshold value and/or the second threshold value;
when the dwell time is smaller than the first threshold value, maintaining the state of the character to be the current state;
when the dwell time is greater than or equal to the first threshold value and is smaller than the second threshold value, switching the state of the character; and
when the dwell time is greater than or equal to the second threshold value, switching the state of the character, and locking the state of subsequently determined characters to be the switched state.

2. The method according to claim 1, wherein
when the character input information is generated by a touch operation, the character input information comprises starting point coordinate information and end point coordinate information of the touch operation; and the dwell time associated with the input operation is a dwell time of the touch operation corresponding to the end point coordinate information.

3. The method according to claim 2, wherein the determining the inputted character according to the character input information comprises:
obtaining (2001) an identifier at a location where the starting point coordinate information locates according to the starting point coordinate information, a mapping relationship existing between the identifier and candidate characters; and
determining (2002) the inputted character according to the starting point coordinate information, the end point coordinate information, and the mapping relationship between the identifier and the candidate characters.

4. The method according to claim 3, wherein the determining (2002) the inputted character according to the starting point coordinate information, the end point coordinate information, and the mapping relationship between the identifier and the candidate characters comprises:
when the starting point coordinate information and the end point coordinate information belong to a range of the candidate characters corresponding to the same identifier, and the dwell time is greater than or equal to a dwell threshold value, obtaining the candidate character at a location where the end point coordinate information locates, as the inputted character; and
when the starting point coordinate information and the end point coordinate information do not belong to the range of the candidate characters corresponding to the same identifier, and the dwell time is greater than or equal to the dwell threshold value, obtaining the candidate character corresponding to the identifier located at the location where the starting point coordinate information locates within a range of a line determined by the starting point coordinate information and the end point coordinate information, as the inputted character.

5. The method according to claim 1, wherein the determining the dwell time associated with the input operation according to the character input information comprises:
reading out the dwell time from the character input information.

6. An input system, comprising:
a reception determining module (400, 500) configured to receive character input information, and determine an inputted character and dwell time associated with the input operation according to the character input information; and
a selection module (402, 502) configured to select a state of the character according to the dwell time and a time threshold value for switching state, wherein the time threshold value for switching state comprises a first threshold value and a second threshold value, and the first threshold value is smaller than the second threshold value; and
the selection module (502) comprises:
a judgment sub-module (5021) configured to judge a magnitude relationship between the dwell time and the first threshold value and/or the second threshold value; and
a selection sub-module (5022) configured to maintain the state of the character to be the current state when the dwell time is smaller than the first threshold value; switch the state of the character when the dwell time is greater than or equal to the first threshold value and smaller than the second threshold value; and switch the state of the character and lock the state of subsequently determined characters to be the switched state when the dwell time is greater than or equal to the second threshold value.

7. The system according to claim 6, wherein
when the character input information is generated by a touch operation, the character input information comprises starting point coordinate information and end point coordinate information of the touch operation; and the dwell time associated with the input operation is a dwell time of the touch operation corresponding to the end point coordinate information.

8. The system according to claim 7, wherein the reception determining module (500) comprises:
an obtaining sub-module (5001) configured to obtain an identifier at a location where the starting point coordinate information locates according to the starting point coordinate information, a mapping relationship existing between the identifier and candidate characters; and
a determination sub-module (5002) configured to determine the inputted character according to the starting point coordinate information, the end point coordinate information, and the mapping relationship between the identifier and the candidate characters.

9. The system according to claim 8, wherein
the determination sub-module (5002) is configured to obtain the candidate characters at the location where the end point coordinate information locates, as the inputted character, when the starting point coordinate information and the end point coordinate information belong to a range of the candidate characters corresponding to the same identifier, and the dwell time is greater than or equal to a dwell threshold value; and to obtain the candidate character corresponding to the identifier located at the location where the starting point coordinate information locates within a range of a line determined by the starting point coordinate information and the end point coordinate information, as the inputted character, when the starting point coordinate information and the end point coordinate information do not belong to the range of the candidate characters corresponding to the same identifier, and the dwell time is greater than or equal to the dwell threshold value.

10. The system according to claim 6, wherein
the reception determining module (400, 500) determining the dwell time associated with the input operation according to the character input information comprises:
the reception determining module (400, 500) reading out the dwell time from the character input information.

## Patentansprüche

1. Eingabeverfahren, umfassend:
Empfangen (100, 200) von Zeicheneingabeinformationen und Bestimmen eines eingegebenen Zeichens und einer mit dem Eingabevorgang assoziierten Verweilzeit gemäß den Zeicheneingabeinformationen; und
Auswählen (102, 202) eines Zustands des Zeichens gemäß der Verweilzeit und einem Zeitschwellenwert zum Umschalten des Zustands,
wobei der Zeitschwellenwert zum Umschalten des Zustands einen ersten Schwellenwert und einen zweiten Schwellenwert umfasst und der erste Schwellenwert kleiner als der zweite Schwellenwert ist;
wobei das Auswählen (202) des Zustands des Zeichens gemäß der Verweilzeit und dem ersten Schwellenwert und/oder dem zweiten Schwellenwert aufweist:
Beurteilen (2021) einer Größenbeziehung zwischen der Verweilzeit und dem ersten Schwellenwert und/oder dem zweiten Schwellenwert;
wenn die Verweilzeit kleiner als der erste Schwellenwert ist, Beibehalten des Zustands des Zeichens als den aktuellen Zustand;
wenn die Verweilzeit größer oder gleich dem ersten Schwellenwert ist und kleiner als der zweite Schwellenwert ist, Umschalten des Zustands des Zeichens; und,
wenn die Verweilzeit größer oder gleich dem zweiten Schwellenwert ist, Umschalten des Zustands des Zeichens und Sperren des Zustands von nachfolgend bestimmten Zeichen auf den umgeschalteten Zustand.

2. Verfahren nach Anspruch 1, wobei,
wenn die Zeicheneingabeinformationen durch einen Berührungsvorgang erzeugt werden, die Zeicheneingabeinformationen Ausgangspunktkoordinaten-Informationen und Endpunktkoordinaten-Informationen des Berührungsvorgangs aufweisen und die mit dem Eingabevorgang assoziierte Verweilzeit eine den Endpunktkoordinaten-Informationen entsprechende Verweilzeit des Berührungsvorgangs ist.

3. Verfahren nach Anspruch 2, wobei das Bestimmen des eingegebenen Zeichens gemäß den Zeicheneingabeinformationen aufweist:
Erhalten (2001) eines Identifikators an einer Stelle, wo sich die Ausgangspunktkoordinaten-Informationen gemäß den Ausgangspunktkoordinaten-Informationen befinden, wobei zwischen dem Identifikator und Zeichenkandidaten eine Zuordnungsbeziehung besteht; und
Bestimmen (2002) des eingegebenen Zeichens gemäß den Ausgangspunktkoordinaten-Informationen, den Endpunktkoordinaten-Informationen und der Zuordnungsbeziehung zwischen dem Identifikator und den Zeichenkandidaten.

4. Verfahren nach Anspruch 3, wobei das Bestimmen (2002) des eingegebenen Zeichens gemäß den Ausgangspunktkoordinaten-Informationen, den Endpunktkoordinaten-Informationen und der Zuordnungsbeziehung zwischen dem Identifikator und den Zeichenkandidaten aufweist:
wenn die Ausgangspunktkoordinaten-Informationen und die Endpunktkoordinaten-Informationen zu einem Bereich der Zeichenkandidaten gehören, die dem gleichen Identifikator entsprechen, und die Verweilzeit größer oder gleich einem Verweilzeitschwellenwert ist, Erhalten des Zeichenkandidaten an einer Stelle, wo sich die Endpunktkoordinaten-Informationen befinden, als das eingegebene Zeichen; und
wenn die Ausgangspunktkoordinaten-Informationen und die Endpunktkoordinaten-Informationen nicht zu dem Bereich der Zeichenkandidaten gehören, die dem gleichen Identifikator entsprechen, und die Verweilzeit größer oder gleich dem Verweilzeitschwellenwert ist, Erhalten des dem Identifikator entsprechenden Zeichenkandidaten, der sich an der Stelle befindet, wo die Ausgangspunktkoordinaten-Informationen innerhalb eines Bereichs einer Linie liegen, die von den Ausgangspunktkoordinaten-Informationen und den Endpunktkoordinaten-Informationen bestimmt wird, als das eingegebene Zeichen.

5. Verfahren nach Anspruch 1, wobei das Bestimmen der mit dem Eingabevorgang assoziierten Verweilzeit gemäß den Zeicheneingabeinformationen aufweist:
Auslesen der Verweilzeit aus den Zeicheneingabeinformationen.

6. Eingabesystem, das aufweist:
ein Empfangsbestimmungsmodul (400, 500), das zum Empfangen von Zeicheneingabeinformationen und zum Bestimmen eines eingegebenen Zeichens und einer mit dem Eingabevorgang assoziierten Verweilzeit gemäß den Zeicheneingabeinformationen; und
ein Auswahlmodul (402, 502), das zum Auswählen eines Zustands des Zeichens gemäß der Verweilzeit und einem Zeitschwellenwert zum Umschalten des Zustands konfiguriert ist, wobei der Zeitschwellenwert zum Umschalten des Zustands einen ersten Schwellenwert und einen zweiten Schwellenwert umfasst und der erste Schwellenwert kleiner als der zweite Schwellenwert ist; und
wobei das Auswahlmodul (502) aufweist:
ein Beurteilungsuntermodul (5021), das zum Beurteilen einer Größenbeziehung zwischen der Verweilzeit und dem ersten Schwellenwert und/oder dem zweiten Schwellenwert konfiguriert ist; und
ein Auswahluntermodul (5022), das konfiguriert ist zum Beibehalten des Zustands des Zeichens als den aktuellen Zustand, wenn die Verweilzeit kleiner als der erste Schwellenwert ist; Umschalten des Zustands des Zeichens, wenn die Verweilzeit größer oder gleich dem ersten Schwellenwert ist und kleiner als der zweite Schwellenwert ist, und Umschalten des Zustands des Zeichens und Sperren des Zustands von nachfolgend bestimmten Zeichen auf den umgeschalteten Zustand, wenn die Verweilzeit größer oder gleich dem zweiten Schwellenwert ist.

7. System nach Anspruch 6, wobei,
wenn die Zeicheneingabeinformationen durch einen Berührungsvorgang erzeugt werden, die Zeicheneingabeinformationen Ausgangspunktkoordinaten-Informationen und Endpunktkoordinaten-Informationen des Berührungsvorgangs aufweisen und die mit dem Eingabevorgang assoziierte Verweilzeit eine den Endpunktkoordinaten-Informationen entsprechende Verweilzeit des Berührungsvorgangs ist.

8. System nach Anspruch 7, wobei das Empfangsbestimmungsmodul (500) aufweist:
ein Erhaltungsuntermodul (500), das zum Erhalten eines Identifikators an einer Stelle, wo sich die Ausgangspunktkoordinaten-Informationen gemäß den Ausgangspunktkoordinaten-Informationen befinden, konfiguriert ist, wobei zwischen dem Identifikator und den Zeichenkandidaten eine Zuordnungsbeziehung besteht; und
ein Bestimmungsuntermodul (5002), das zum Bestimmen des eingegebenen Zeichens gemäß den Ausgangspunktkoordinaten-Informationen, den Endpunktkoordinaten-Informationen und der Zuordnungsbeziehung zwischen dem Identifikator und den Zeichenkandidaten konfiguriert ist.

9. System nach Anspruch 8, wobei
das Bestimmungsuntermodul (5002) konfiguriert ist zum Erhalten der Zeichenkandidaten an der Stelle, wo sich die Endpunktkoordinaten-Informationen befinden, als das eingegebene Zeichen, wenn die Ausgangspunktkoordinaten-Informationen und die Endpunktkoordinaten-Informationen zu einem Bereich der Zeichenkandidaten gehören, die dem gleichen Identifikator entsprechen, und die Verweilzeit größer oder gleich einem Verweilzeitschwellenwert ist; und zum Erhalten des dem Identifikator entsprechenden Zeichenkandidaten, der sich an der Stelle befindet, wo die Ausgangspunktkoordinaten-Informationen innerhalb eines Bereichs einer Linie liegen, die von den Ausgangspunktkoordinaten-Informationen und den Endpunktkoordinaten-Informationen bestimmt wird, als das eingegebene Zeichen, wenn die Ausgangspunktkoordinaten-Informationen und die Endpunktkoordinaten-Informationen nicht zu dem Bereich der Zeichenkandidaten gehören, die dem gleichen Identifikator entsprechen, und die Verweilzeit größer oder gleich dem Verweilzeitschwellenwert ist.

10. System nach Anspruch 6, wobei
das Empfangsbestimmungsmodul (400, 500), das die mit dem Eingabevorgang assoziierte Verweilzeit gemäß den Zeicheneingabeinformationen bestimmt, aufweist:
das Auslesen der Verweilzeit aus den Zeicheneingabeinformationen durch das Empfangsbestimmungsmodul (400, 500).

## Revendications

1. Procédé de saisie, comprenant :
la réception (100, 200) d'informations de saisie de caractère, et la détermination d'un caractère saisi et d'une durée de séjour associés à l'opération de saisie en fonction des informations de saisie de caractère ; et
la sélection (102, 202) d'un état du caractère en fonction de la durée de séjour et d'une valeur limite de temps de commutation d'état,
dans lequel la valeur limite de temps de commutation d'état comprend une première valeur limite et une seconde valeur limite, et la première valeur limite est inférieure à la seconde valeur limite ;
la sélection (202) de l'état du caractère en fonction de la durée de séjour et de la valeur limite de temps de commutation d'état comprend :
le jugement (2021) d'une relation de grandeur entre la durée de séjour et la première valeur limite et/ou la seconde valeur limite ;
quand la durée de séjour est inférieure à la première valeur limite, le maintien de l'état du caractère comme état courant ;
quand la durée de séjour est supérieure ou égale à la première valeur limite et inférieure à la seconde valeur limite, la commutation de l'état du caractère ; et
quand la durée de séjour est supérieure ou égale à la seconde valeur limite, la commutation de l'état du caractère, et le verrouillage de l'état de caractères déterminés ensuite comme état commuté.

2. Procédé selon la revendication 1, dans lequel
quand les informations de saisie de caractère sont générées par une opération tactile, les informations de saisie de caractère comprennent des informations de coordonnées de point de début et des informations de coordonnées de point de fin de l'opération tactile ; et la durée de séjour associée à l'opération de saisie est une durée de séjour de l'opération tactile correspondant aux informations de coordonnées de point de fin.

3. Procédé selon la revendication 2, dans lequel la détermination du caractère saisi en fonction des informations de saisie de caractère comprend :
l'obtention (2001) d'un identifiant à un emplacement auquel les informations de coordonnées de point de début situent en fonction des informations de coordonnées de point de début, une relation de correspondance existant entre l'identifiant et les caractères candidats ; et
la détermination (2002) du caractère saisi en fonction des informations de coordonnées de point de début, des informations de coordonnées de point de fin, et de la relation de correspondance entre l'identifiant et les caractères candidats.

4. Procédé selon la revendication 3, dans lequel la détermination (2002) du caractère saisi en fonction des informations de coordonnées de point de début, des informations de coordonnées de point de fin, et de la relation de correspondance entre l'identifiant et les caractères candidats comprend :
quand les informations de coordonnées de point de début et les informations de coordonnées de point de fin appartiennent à une plage des caractères candidats correspondant au même identifiant, et la durée de séjour est supérieure ou égale à une valeur limite de séjour, l'obtention du caractère candidat à un emplacement auquel les informations de coordonnées de point de fin se trouvent, comme caractère saisi ; et
quand les informations de coordonnées de point de début et les informations de coordonnées de point de fin n'appartiennent pas à la plage des caractères candidats correspondant au même identifiant, et la durée de séjour est supérieure ou égale à la valeur limite de séjour,
l'obtention du caractère candidat correspondant à l'identifiant situé à l'emplacement auquel les informations de coordonnées de point de début se trouvent en-deçà d'une distance d'une ligne déterminée par les informations de coordonnées de point de début et les informations de coordonnées de point de fin, comme caractère saisi.

5. Procédé selon la revendication 1, dans lequel la détermination de la durée de séjour associée à l'opération de saisie en fonction des informations de saisie de caractère comprend :
la lecture de la durée de séjour à partir des informations de saisie de caractère.

6. Système de saisie, comprenant :
un module de détermination de réception (400, 500) configuré pour recevoir des informations de saisie de caractère, et déterminer un caractère saisi et une durée de séjour associés à l'opération de saisie en fonction des informations de saisie de caractère ; et
un module de sélection (402, 502) configuré pour sélectionner un état du caractère en fonction de la durée de séjour et d'une valeur limite de temps de commutation d'état, dans lequel la valeur limite de temps de commutation d'état comprend une première valeur limite et une seconde valeur limite, et la première valeur limite est inférieure à la seconde valeur limite ; et
le module de sélection (502) comprend :
un sous-module de jugement (5021) configuré pour juger une relation de grandeur entre la durée de séjour et la première valeur limite et/ou la seconde valeur limite ; et
un sous-module de sélection (5022) configuré pour maintenir l'état du caractère comme l'état courant quand la durée de séjour est inférieure à la première valeur limite ; commuter l'état du caractère quand la durée de séjour est supérieure ou égale à la première valeur limite et
inférieure à la seconde valeur limite ; et commuter l'état du caractère et verrouiller l'état des caractères déterminés ensuite comme l'état commuté quand la durée de séjour est supérieure ou égale à la seconde valeur limite.

7. Système selon la revendication 6, dans lequel
quand les informations de saisie de caractère sont générées par une opération tactile, les informations de saisie de caractère comprennent des informations de coordonnées de point de début et des informations de coordonnées de point de fin de l'opération tactile ; et la durée de séjour associée à l'opération de saisie est une durée de séjour de l'opération tactile correspondant aux informations de coordonnées de point de fin.

8. Système selon la revendication 7, dans lequel le module de détermination de réception (500) comprend :
un sous-module d'obtention (5001) configuré pour obtenir un identifiant à un emplacement auquel les informations de coordonnées de point de début situent en fonction des informations de coordonnées de point de début, une relation de correspondance existant entre l'identifiant et les caractères candidats ; et
un sous-module de détermination (5002) configuré pour déterminer le caractère saisi en fonction des informations de coordonnées de point de début, des informations de coordonnées de point de fin, et de la relation de correspondance entre l'identifiant et les caractères candidats.

9. Système selon la revendication 8, dans lequel
le sous-module de détermination (5002) est configuré pour obtenir les caractères candidats à l'emplacement auquel les informations de coordonnées de point de fin se trouvent, comme caractère saisi, quand les informations de coordonnées de point de début et les informations de coordonnées de point de fin appartiennent à une plage des caractères candidats correspondant au même identifiant, et la durée de séjour est supérieure ou égale à une valeur limite de séjour ; et obtenir le caractère candidat correspondant à l'identifiant situé à l'emplacement auquel les informations de coordonnées de point de début se trouvent en-deçà d'une distance d'une ligne déterminée par les informations de coordonnées de point de début et les informations de coordonnées de point de fin, comme caractère saisi, quand les informations de coordonnées de point de début et les informations de coordonnées de point de fin n'appartiennent pas à la plage des caractères candidats correspondant au même identifiant, et la durée de séjour est supérieure ou égale à la valeur limite de séjour.

10. Système selon la revendication 6, dans lequel
la détermination par le module de détermination de réception (400, 500) de la durée de séjour associée à l'opération de saisie en fonction des informations de saisie de caractère comprend :
la lecture par le module de détermination de réception (400, 500) de la durée de séjour à partir des informations de saisie de caractère.
